# EUROPEAN PATENT APPLICATION

(11) **EP 3 934 259 A1**
(43) Date of publication of application: **05.01.2022**
(21) Application number: 20797359.5
(22) Date of filing: 19.06.2020
(51) Int. Cl.: H04N 21/234

(54) **METHOD AND APPARATUS FOR TRANSCODING VIDEO**

(30) Priority: 30.04.2020 CN 202010367208
(71) Applicant: Wangsu Science & Technology Co., Ltd., Shanghai 200030 (CN)
(72) Inventor: LIU, Anjie, Shanghai 200030 (CN)
(74) Representative: Raynor, Simon Mark
(86) International application number: PCT/CN2020/097171
(87) International publication number: WO 2021/217828

(57) **Abstract**

The present disclosure discloses a method and a device for transcoding a video, which belongs to video processing technologies. The method includes: reconstructing an existing semantic segmentation model based on a processing layer supported by a TensorRT engine (101); loading a reconstructed semantic segmentation model into the TensorRT engine to generate a TensorRT acceleration model (102); performing semantic segmentation on a video frame image through the TensorRT acceleration model to generate a multi-level ROI of the video frame image (103); using different transcoding rates to transcode the multi-level ROI and other regions of the video frame image respectively (104).

## Description

### CROSS REFERENCE TO RELATED APPLICATIONS

The present disclosure refers to Chinese patent application No. 202010367208.2, entitled "METHOD AND DEVICE FOR TRANSCODING VIDEO," filed on April 30, 2020, which is incorporated by reference herein in its entirety.

### TECHNICAL FIELD

The present disclosure relates to the field of video processing technology, in particular to a method and a device for transcoding a video.

### BACKGROUND

With the development of internet technology and the continuous acceleration of modern bandwidth, the Internet has become more and more closely connected with people's lives. More and more people are keen to acquire videos on the Internet to enrich their lives. Nowadays, high-quality videos have become the first choice for people's daily needs. For video service platforms, they often need to transcode video data on the server in order to adapt to different network bandwidths, terminal processing capabilities, and user demands.

A background server of the video service platform may first acquire an initial video that has been encapsulated (which may be called an input video), then generate multiple transcoding tasks according to different transcoding rules and create a corresponding transcoding process for each of the transcoding tasks, and further implement steps of parsing, transcoding, and encapsulating the video data of the initial video through transcoding threads in the transcoding process. After transcoding the video data and receiving a user terminal's request for acquiring the video data which is under a certain transcoding rule, the background server may push the generated video data that has been transcoded to the user terminal.

If a code rate of the transcoded video is too small, the picture quality of the video may be poor and even picture distortion or mosaic phenomenon may occur. However, if the code rate of the transcoded video is too large, it may result in waste of bandwidth resources during video transmission. Therefore, there is an urgent need for a video transcoding technology that can not only guarantee picture quality of the video, but also reduce consumption of the bandwidth resources during the video transmission.

### SUMMARY

In order to solve problems in the existing technology, embodiments of the present disclosure provide a method and device for transcoding a video, and the technical solution is as follows.

The embodiments of the present disclosure provide a method for transcoding a video, and the method includes:
reconstructing an existing semantic segmentation model based on a processing layer supported by a TensorRT engine;
loading a reconstructed semantic segmentation model into the TensorRT engine to generate a TensorRT acceleration model;
performing semantic segmentation on a video frame image through the TensorRT acceleration model to generate a multi-level ROI of the video frame image; and
using different transcoding rates to transcode the multi-level ROI and other regions of the video frame image respectively.

The embodiments of the present disclosure provide a device for transcoding a video, and the device includes:
a model reconstruction module, configured to reconstruct an existing semantic segmentation model based on a processing layer supported by a TensorRT engine;
a model acceleration module, configured to load a reconstructed semantic segmentation model into the TensorRT engine to generate a TensorRT acceleration model;
an image segmentation module, configured to perform semantic segmentation on a video frame image through the TensorRT acceleration model to generate a multi-level ROI of the video frame image; and
a video transcoding module, configured to use different transcoding rates to transcode the multi-level ROI and other regions of the video frame image.

The embodiments of the present disclosure provide a background server including a processor and a memory, where the memory stores at least one instruction, at least one program, a code set or an instruction set which, when loaded and executed by the processor, causes the processor to perform the method for transcoding the video as described above.

The embodiments of the present disclosure provide a computer readable storage medium storing at least one instruction, at least one program, a code set or an instruction set which, when loaded and executed by a processor, causes the processor to perform the method for transcoding the video as described above.

The technical solutions provided in the embodiments of the present disclosure have the following beneficial effects. In the embodiments of the present disclosure, the existing semantic segmentation model is reconstructed based on the processing layer supported by the TensorRT engine; the reconstructed semantic segmentation model is loaded into the TensorRT engine to generate the TensorRT acceleration model; the semantic segmentation is performed on the video frame image through the TensorRT acceleration model to generate the multi-level ROI of the video frame image; and the different transcoding rates are used to transcode the multi-level ROI and other regions of the video frame image respectively. In this way, through the reconstruction of the existing semantic segmentation model, the semantic segmentation model may be accelerated by using the TensorRT engine, so that both the image segmentation effect and real-time performance can be ensured. Furthermore, the accelerated model is used to perform quick semantic segmentation on the video frame image to obtain the multi-level ROI of the video frame image, the range of the ROI may be flexibly and accurately determined according to different scenes, and then the different transcoding rates are used to transcode each ROI, so that contents of all levels in the video frame image may occupy the code rate share reasonably, which can not only ensure picture quality of the video, but also reduce consumption of bandwidth resource during video transmission.

### BRIEF DESCRIPTION OF THE DRAWINGS

In order to illustrate the technical solutions in the embodiments of the present disclosure more clearly, the accompanying drawings used in the description of the embodiments are briefly described below. It is apparent that the drawings in the following description are merely some embodiments of the present disclosure. For those skilled in the art, other drawings may also be obtained according to these drawings without any inventive work.
FIG. 1 is a flowchart of a method for transcoding a video provided in an embodiment of the present disclosure;
FIG. 2 is a structural schematic diagram of a pyramid pooling module of an existing PSPNet model provided in an embodiment of the present disclosure;
FIG. 3 is a structural schematic diagram of a pyramid pooling module of a reconstructed PSPNet model provided in an embodiment of the present disclosure;
FIG. 4 is another structural schematic diagram of a pyramid pooling module of a reconstructed PSPNet model provided in an embodiment of the present disclosure;
FIG. 5 is a flow diagram of semantic segmentation provided in an embodiment of the present disclosure;
FIG. 6 is an output diagram of performing semantic segmentation on a video frame image provided in an embodiment of the present disclosure;
FIG. 7 is a structural schematic diagram of a device for transcoding a video provided in an embodiment of the present disclosure;
FIG. 8 is a structural schematic diagram of a background server provided in an embodiment of the present disclosure.

### DETAILED DESCRIPTION

In order to make the objectives, technical solutions, and advantages of the present disclosure clearer, the embodiments of the present disclosure will be described in detail with reference to the accompanying drawings.

An embodiment of the present disclosure provides a method for transcoding a video, and an execution subject of the method may be a background server of a video service platform. Herein, the background server may have a video transcoding function. After receiving a data stream of a video to be transcoded, the background server may transcode a video frame image, and then may provide the transcoded video data to the outside. At the same time, the background server may further have an image analysis function, and may adjust the transcoding processing on the video based on an image analysis result. The video service platform may be provided with multiple background servers, each of the background servers may be used to perform transcoding tasks for multiple videos, and each of the videos may correspond to multiple transcoding tasks according to transcoding demands. The background server described above may include a processor, a memory and a transceiver. The processor may be configured to perform the processing of transcoding the video in the following process, the memory may be configured to store the data required and generated in the following processing process, and the transceiver may be configured to receive and send relevant data in the following processing process. The method for transcoding the video disclosed in this embodiment may be applied to a live video, and may also be applied to a video on demand.

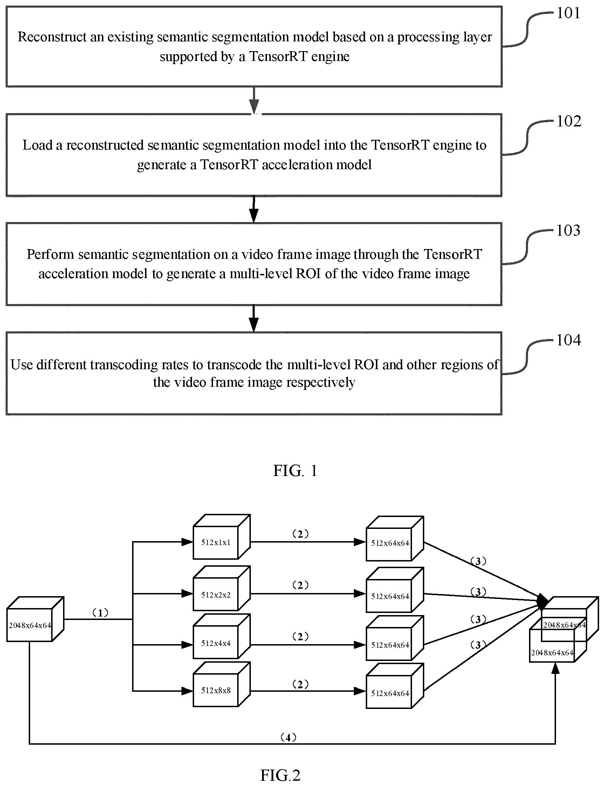

The processing flow shown in FIG. 1 will be described in detail below in combination with specific embodiments, and the content may be as follows.

In step 101, an existing semantic segmentation model is reconstructed based on a processing layer supported by a TensorRT engine.

Herein, the semantic segmentation model may be a Pyramid Scene Parsing Network (PSPNet) model, a U-Net model, a LinkNet model, a Point-wise Spatial Attention (PSANet) model, an High-Resolution Network (HRNet) model, an Object Context Network (OCNet) model, a Deeplab version 3 (DeepLabv3) model, and a Deeplab version 3+ (DeepLabv3+) model, etc.

In implementation, the TensorRT engine for accelerating an inference process of a machine learning model may be installed on the background server which may use the TensorRT engine to accelerate the existing semantic segmentation model, so as to shorten the inference time of the semantic segmentation model. However, since the existing semantic segmentation model may have a processing layer that may not be accelerated by the TensorRT engine, the background server may reconstruct the existing semantic segmentation model based on the processing layer supported by the TensorRT engine, so that the reconstructed semantic segmentation model may be effectively recognized by the TensorRT engine and inference acceleration thereof may be performed.

In one embodiment, the PSPNet model may be selected as the semantic segmentation model, then some of the processing layers of the existing PSPNet model may be replaced. Correspondingly, the processing of step 101 may be as follows. A self-adaptive pooling layer and a bilinear upsampling layer in the existing PSPNet model are respectively replaced with processing layers having similar effects and supported by the TensorRT engine.

In implementation, the background server may detect all the processing layers of the existing PSPNet model and compare all the processing layers with the processing layers supported by the TensorRT engine, so as to determine that the self-adaptive pooling layer and bilinear upsampling layer in the existing PSPNet model are unable to be accelerated by the TensorRT engine. Therefore, the background server may search processing layers having similar effects to the self-adaptive pooling layer and bilinear upsampling layer in the processing layers supported by the TensorRT engine, so as to replace the self-adaptive pooling layer and bilinear upsampling layer in the existing PSPNet model with these processing layers respectively.

In one embodiment, the self-adaptive pooling layer in the existing PSPNet model may be replaced with a multi-scale mean pooling layer, and the bilinear upsampling layer in the existing PSPNet model may be replaced with a transpose convolution layer.

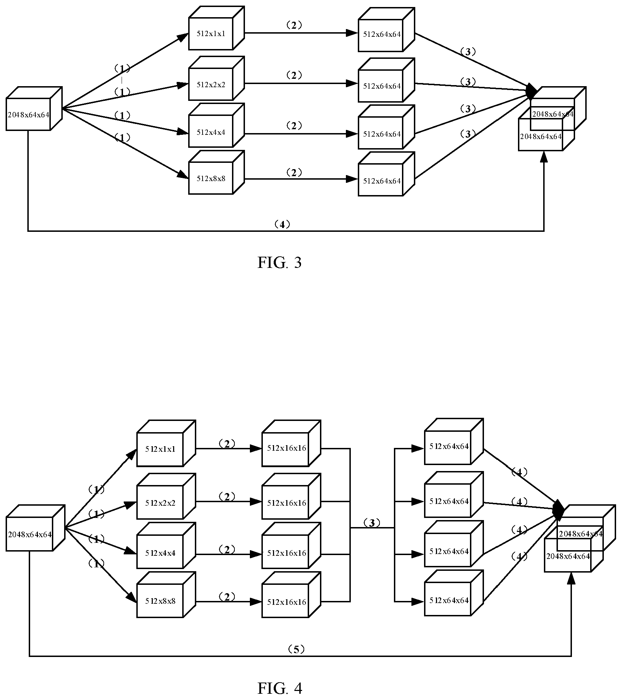

In implementation, for the self-adaptive pooling layer in the existing PSPNet model, a set of pooling layers of different sizes may be used to replace the self-adaptive pooling layer to achieve a similar effect as self-adaptive pooling and realize TensorRT acceleration. For the bilinear upsampling layer in the existing PSPNet model, the transpose convolution layer may be used to replace the bilinear upsampling layer to achieve a similar effect as the self-adaptive pooling and realize the TensorRT acceleration. For ease of understanding, taking a 2048×64×64 feature map (i.e., the number of channels is 2048 and the image size is 64×64) output by the feature extraction module as an example, the following content respectively provides processing processes of a pyramid pooling module of the existing PSPNet model and a pyramid pooling module of a reconstructed PSPNet model (both of them take four-scale feature fusion processing as an example, and the PSPNet model may also support any other multiple-scale feature fusion).
1. The pyramid pooling module of the existing PSPNet model may refer to FIG. 2.
   (1) Four feature maps of different scales are generated through the self-adaptive pooling layer, and a 1x1 convolutional layer is used to reduce the number of channels to obtain feature maps of 512×1×1, 512×2×2, 512×4×4 and 512×8×8;
   (2) The four feature maps of 512×1×1, 512×2×2, 512×4×4 and 512×8×8 are respectively processed through the bilinear upsampling layer to be enlarged by different multiples in image size, so as to obtain four 512×64×64 feature maps.
   (3) The four 512×64×64 feature maps are concatenated along the channel dimension into a 2048×64×64 feature map;
   (4) The 2048×64×64 feature map is concatenated with an input feature map to obtain a 4096×64×64 feature map as an output.
2. The pyramid pooling module of the reconstructed PSPNet model may refer to FIG. 3.
   (1) The input image is subsampled respectively through four pooling layers of different sizes (kernel sizes are 64, 32, 16 and 8 respectively and strides are equal to the kernel sizes respectively) to obtain four feature maps of different scales, and the 1x1 convolutional layer is used to reduce the number of channels so as to obtain feature maps of 512×1×1, 512×2×2, 512×4×4 and 512×8×8;
   (2) The four feature maps of 512×1×1, 512×2×2, 512×4×4 and 512×8×8 are respectively processed through the transpose convolution layer to be enlarged by different multiples in image size, so as to obtain four 512×64×64 feature maps. Herein, a kernel size, stride and padding may be set by the transpose convolution layer to achieve the purpose of a fixed multiple of the upsampling. For example, the feature map is desired to be enlarged n times, then kernel size=2n, stride=n, and padding=rounded (n/2);
   (3) The four 512×64×64 feature maps are concatenated along the channel dimension into a 2048×64×64 feature map;
   (4) The 2048×64×64 feature map is concatenated with the input feature map to obtain a 4096×64×64 feature map as the output.

In one embodiment, the feature maps of multiple scales may be set to share the same transpose convolution layer to reduce the number of parameters and an amount of calculation, and the corresponding processing may be as follows. The bilinear upsampling layers of multiple scales in the existing PSPNet model are replaced by a nearest neighbor pool upsampling layer and a shared transpose convolution layer.

In implementation, when the background server uses the transpose convolution layer to replace the bilinear upsampling layer in the existing PSPNet model, the nearest neighbor pool upsampling layer and the shared transpose convolution layer may be used for replacement with regard to the bilinear upsampling layers of multiple scales. That is, the nearest neighbor pool upsampling layer with no parameters is first used to upsample the feature maps of multiple scales to the same size, and then the same shared transpose convolution layer is shared to uniformly enlarge the feature maps to a specified size. Specifically, referring to FIG. 4, continuing with the example of the 2048×64×64 feature map (i.e., the number of channels is 2048 and the image size is 64×64) output by the feature extraction module, the processing process of the pyramid pooling module of the reconstructed PSPNet model may be as follows.
(1) The input image is subsampled respectively through four pooling layers of different sizes (kernel sizes are 64, 32, 16 and 8 respectively and strides are equal to the kernel sizes respectively) to obtain four feature maps of different scales, and the 1x1 convolutional layer is used to reduce the number of channels so as to obtain feature maps of 512x1x1, 512x2x2, 512x4x4 and 512x8x8;
(2) The four feature maps of 512×1×1, 512×2×2, 512×4×4 and 512×8×8 are respectively upsampled to the size of 512×16×16 through nearest neighbor interpolation;
(3) The 512×16×16 feature map is enlarged 4 times through the shared transpose convolution layer to obtain a 512×64×64 feature map;
(4) The four 512×64×64 feature maps are concatenated along the channel dimension into a 2048×64×64 feature map;
(5) The 2048×64×64 feature map is concatenated with the input feature map to obtain a 4096×64×64 feature map as the output.

In step 102, the reconstructed semantic segmentation model is loaded into the TensorRT engine to generate a TensorRT acceleration model.

In one embodiment, the reconstructed semantic segmentation model may be periodically trained to update the TensorRT acceleration model. Correspondingly, the generation processing of the TensorRT acceleration model in step 102 may be as follows: periodically training the reconstructed semantic segmentation model based on image materials in a preset training material set to generate a weight file; and loading a model file of the reconstructed semantic segmentation model and the weight file into the TensorRT engine to generate the TensorRT acceleration model. Herein, the image materials are marked with contour lines of various components of different objects.

In implementation, the background server may periodically optimize and update the semantic segmentation model to improve accuracy of the semantic segmentation of the semantic segmentation model to images. Therefore, a technician of the video service platform may select various frame images of various types of videos, and use an open source annotation tool (such as labelme) to mark the contour lines of the various components of different objects in the frame images, so that the marked frame images may be stored in the preset training material set as image materials for training the semantic segmentation model. Herein, when marking the contour line, the technician may selectively mark a part of the objects in the images as needed, and may divide the objects arbitrarily as required. In this way, the background server may periodically train the reconstructed semantic segmentation model based on the image materials in the preset training material set to generate the weight file that is applicable within the model. Afterwards, the background server may load the model file of the reconstructed semantic segmentation model and the weight file that is periodically generated into the TensorRT engine to generate the TensorRT acceleration model.

In step 103, the semantic segmentation is performed on the video frame image through the TensorRT acceleration model to generate a multi-level ROI of the video frame image.

In implementation, after the background server generates the TensorRT acceleration model, the TensorRT acceleration model may be applied to the transcoding processing of the video frame image. That is, the video frame image may be input into the TensorRT acceleration model to perform the processing of the semantic segmentation. After that, the multi-level ROI of a target frame image may be obtained according to a segmentation result. Next, the background server may select a segmented part of the image region obtained by segmentation as the multi-level ROI of the video frame image.

In one embodiment, ROIs of different levels may correspond to different components of an object. Correspondingly, the processing of step 103 may be as follows: acquiring the target frame image of the video to be transcoded, and generating a global feature map of the target frame image based on a feature extraction module of the TensorRT acceleration model; performing feature segmentation on the global feature map through a feature segmentation module of the TensorRT acceleration model to determine multiple components of at least one target object in the target frame image; and determining the multi-level ROI of the target frame image based on a transcoding priority corresponding to each of the components.

In implementation, after acquiring the data stream of a certain video, the background server may judge whether the video is a video to be transcoded (that is, whether there is a transcoding demand) according to a video transcoding rule preset by the video service platform. If the video is a video to be transcoded, the background server may transcode the frame images of the video to be transcoded sequentially. Specifically, the background server may first acquire the target frame image of the video to be transcoded, and then input the target frame image into the feature extraction module of the TensorRT acceleration model to generate the global feature map of the target frame image. Herein, the target frame image may be any frame image of the video to be transcoded, also be any key frame image of the video to be transcoded or any frame image within a specified time period of the video to be transcoded, which may depend on transcoding demands.

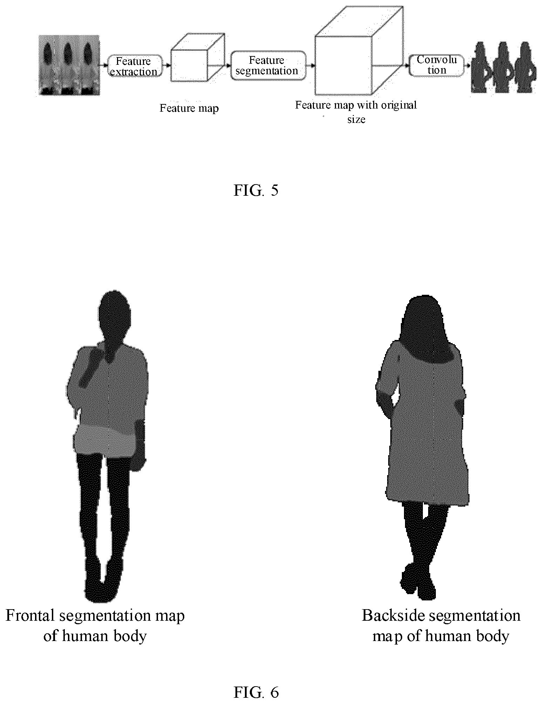

After that, the global feature map of the target frame image may be input into the feature segmentation module of the TensorRT acceleration model to perform the feature segmentation on the target frame image, thereby obtaining multiple components of at least one target object in the target frame image. The above process may refer to FIG. 5. It may be understood that the segmentation rule of the target object and its components may be generated based on the training of a large amount of image materials. That is, it is possible to define which objects need to be segmented from the video frame image and which components of the object need to be segmented independently through model training. FIG. 6 shows an exemplary result of the semantic segmentation, where the entire image contains two parts: background and human body, and the human body is further subdivided into five parts: head, upper body, lower body, arms and legs. After that, the background server may determine the multi-level ROI of the target frame image based on the transcoding priority corresponding to each of the components. Herein, the higher the transcoding priority corresponding to the ROI, the higher the transcoding rate of the ROI; other regions use a lowest transcoding rate for transcoding. It should be noted that the transcoding priorities of different components of different target objects may be preset in the background server. For example, the human head has a highest transcoding priority, and the transcoding priorities of the upper body, the lower body and limbs decrease sequentially. In addition, components with the same transcoding priority may exist between different objects. For example, the transcoding priorities of the human head and a car logo in one image may both belong to the highest level. That is to say, the ROI of each level in the target frame image may contain multiple components of multiple objects.

In one embodiment, for different types of frame images, different TensorRT acceleration models may be selected for semantic segmentation, and the corresponding processing may be as follows: calling a target video type of the video to be transcoded and a target semantic segmentation model corresponding to the target image type of the target frame image.

In implementation, the background server may train dedicated semantic segmentation models for frame images in videos of different video types, and one semantic segmentation model may be dedicated to performing the semantic segmentation on frame images in videos of one video type. For example, there may be different PSPNet models corresponding to different types of videos, such as food, games, sports and the like. In this way, before performing the semantic segmentation on the video to be transcoded, the background server may first detect the target video type to which the video to be transcoded belongs and then call the target semantic segmentation model corresponding to the target video type. It should be understood that the background server may set training material sets corresponding to multiple video types when training the semantic segmentation model. One training material set may contain image materials of the same video type, so that the background server may use each of the training material sets to train the semantic segmentation model corresponding to the respective video type.

Of course, the background server may also train dedicated semantic segmentation models for frame images of different image types, and one semantic segmentation model may be dedicated to performing the semantic segmentation on frame images of one image type. For example, there may be different PSPNet models corresponding to different image types such as person images, food images, indoor environment images and the like. In this way, after acquiring the target frame image, the background server may first detect the target image type to which the target frame image belongs, and then call the target semantic segmentation model corresponding to the target image type. Similarly, when training the semantic segmentation model, the background server may set training material sets corresponding to multiple image types. One training material set may contain image materials of the same image type, so that the background server may use each of the training material sets to train the semantic segmentation model corresponding to the respective image type.

In this embodiment, for frame images of different image types in videos of different video types, dedicated semantic segmentation models may also be trained, and one semantic segmentation model may be dedicated to performing the semantic segmentation on frame images of one image type in the video of one video type. For example, there may be different semantic segmentation models corresponding to character images in food videos, task images in sports videos, and the like. In this way, after acquiring the target frame image, the background server may first detect the target video type to which the video to be transcoded belongs and the target image type to which the target frame image belongs, and then call the target semantic segmentation model corresponding to the target video type and the target image type. Similarly, when training the semantic segmentation model, the background server may set training material sets corresponding to multiple image types under multiple video types. One training material set may contain image materials of the same image type under the same video type, so that the background server may use each of the training material sets to train the semantic segmentation model corresponding to the respective image type under the respective video type.

In step 104, different transcoding rates are used to transcode the multi-level ROI and other regions of the video frame image respectively.

In implementation, after determining the multi-level ROI of the video frame image, the background server may use different transcoding rates to transcode the ROI of each level and other regions in the video frame image except the ROI. Herein, the level of the ROI may be determined according to the image content within the region. For example, if the video frame image is a whole body image of a person, the head may be set as the highest-level ROI, the upper body may be set as the second highest-level ROI, the lower body may be set as the middle-level ROI, the limbs may be set as the low-level ROI, and the background may be set as the lowest-level ROI. Different transcoding rates may be selected for the ROIs of different levels, and the same transcoding rate may be selected for adjacent ROIs.

In one embodiment, the transcoding area may be used to set the transcoding rate of each region of the image. Correspondingly, the processing of step 104 may be as follows: selecting a target-level transcoding rate sequentially in a descending order of the transcoding rate; selecting, in a descending order of the transcoding priority, a transcoding region corresponding to the target-level transcoding rate from unselected ROIs according to the transcoding area corresponding to the target-level transcoding rate.

Herein, the target-level transcoding rate may be the transcoding rate of any level.

In implementation, the background server may support transcoding rates of multiple levels for video frame image transcoding. When transcoding each of the regions in the target frame image, the background server may sequentially select the target-level transcoding rate in a descending order of the transcoding rate first. After that, the background server may acquire a preset transcoding area corresponding to the target-level transcoding rate, select a first ROI from all the unselected ROIs in a descending order of the transcoding priority at the same time, and then compare the area of the first ROI with the transcoding area. If the area of the first ROI is less than the transcoding area, a second ROI with a next-level transcoding priority is selected, and the sum of the areas of the first ROI and the second ROI is compared with the transcoding area. If the sum of the areas of the two ROIs is still less than the transcoding area, a third ROI with a further-next-level transcoding priority may be selected and the area comparison may be continued, and so on, until the sum of all selected ROIs is greater than the transcoding area. Furthermore, the background server may use all the selected ROIs as transcoding regions corresponding to the target-level transcoding rate.

In details, based on the above processing, the areas of all the selected transcoding regions will be greater than the preset transcoding area, which may cause load pressure on device performance and line bandwidth. Therefore, an excess-area region may be selected from a ROI with the lowest transcoding priority in the ROIs corresponding to the transcoding rate of each level, and then the excess-area region may be transferred into the transcoding region corresponding to the next-level transcoding rate. For example, an edge region of the ROI may be selected during the selection of the excess-area region.

In one embodiment, the background server may periodically adjust the transcoding area corresponding to the transcoding rate of each level according to current device performance load and line bandwidth load, and attribute information of the video to be transcoded.

In implementation, the background server may periodically detect the current device performance load and line bandwidth load, and adjust the transcoding processing of each video to be transcoded on a current device according to a detection result. Specifically, the background server may first determine one or more videos to be transcoded for which transcoding processing needs to be adjusted according to the attribute information of all videos to be transcoded. After that, the background server may adjust the transcoding area corresponding to the transcoding rate of each level for each video to be transcoded according to the attribute information of the video to be transcoded and the above detection result. For example, if both the current device performance load and the line bandwidth load are relatively low, a video to be transcoded with higher popularity may be selected and the transcoding area corresponding to a high transcoding rate may be increased. And if both the current device performance load and the line bandwidth load are relatively high, the video to be transcoded with lower popularity may be selected and the transcoding area corresponding to the high transcoding rate may be reduced. Of course, in addition to the video popularity, the background server may also select the video to be transcoded that needs to be adjusted according to multi-dimensional attribute information such as a video owner, posting time, video type and video duration.

In one embodiment, the components of different types of objects have different transcoding priorities in different types of videos. Correspondingly, the processing after multiple components of at least one target object in the target frame image is determined may be as follows: adjusting the transcoding priority corresponding to the components of each target object according to a video type of the video to be transcoded and an object type of each target object.

In implementation, after performing the semantic segmentation on the target frame image to obtain multiple components of the target objects in the target frame image, the background server may acquire the video type of the video to be transcoded and the object type of each target object, and then adjust the transcoding priorities corresponding to the components of each target object based on the two type information. It should be understood that the key contents present on the pictures of different types of videos are also different. For example, in dance videos, the attention for the trunk and limbs of human body is greater than that of the head of human body, so the transcoding priority of the trunk and limbs of human body may be increased, and the transcoding priority of the head may be decreased. However, in talk show videos, the transcoding priority of the head of human body may be higher than the transcoding priority of the trunk and limbs of human body. And another example is that, compared with person videos, the transcoding priority of the human body may be lower than the transcoding priority of the scene in tourism videos. In this embodiment, the background server may also adjust the transcoding priorities corresponding to the components of each of the objects based on the image type of each of the frame images and the object type of each of the objects in the frame image.

In one embodiment, the transcoding rate of a specified region in the video frame image may be adjusted based on actual demands. Correspondingly, the processing of step 104 may be as follows: receiving information of feature clarity or fuzz of the video to be transcoded, and determining a target feature region in the target frame image according to the information of feature clarity or fuzz; using different transcoding rates to transcode the multi-level ROI, the target feature region and other regions of the target frame image respectively.

In implementation, the video provider or the technician of the video service platform may set the information of feature clarity or fuzz of the video to be transcoded at the background server, so as to improve or reduce transcoding clarity of one or some of feature contents in the video frame image. In this way, when transcoding the video to be transcoded, the video server may receive the information of feature clarity or fuzz of the video to be transcoded, and then determine the target feature region in the target frame image according to the information of feature clarity or fuzz. The target feature region contains the feature content directed to by the information of feature clarity or fuzz. After that, the background server may use different transcoding rates to transcode the multi-level ROI, the target feature region and other regions of the target frame image respectively. Herein, the information of feature clarity or fuzz may directly include a specific value of the transcoding rate of the target feature region, or may also include a adjustment range of the transcoding rate of the target feature region.

In the embodiments of the present disclosure, the existing semantic segmentation model is reconstructed based on the processing layer supported by the TensorRT engine; the reconstructed semantic segmentation model is loaded into the TensorRT engine to generate the TensorRT acceleration model; the TensorRT acceleration model is performed on the video frame image through the TensorRT acceleration model to generate the multi-level ROI of the video frame image; and the different transcoding rates are used to transcode the multi-level ROI and other regions of the video frame image respectively. In this way, through the reconstruction of the existing semantic segmentation model, the semantic segmentation model may be accelerated by using the TensorRT engine, so that both the image segmentation effect and real-time performance can be ensured. Furthermore, the accelerated model is used to perform quick semantic segmentation on the video frame image to obtain the multi-level ROI of the video frame image, the range of the ROI may be flexibly and accurately determined according to different scenes, and then the different transcoding rates are used to transcode each ROI, so that contents of all levels in the video frame image may occupy the code rate share reasonably, which can not only ensure picture quality of the video, but also reduce consumption of bandwidth resource during video transmission.

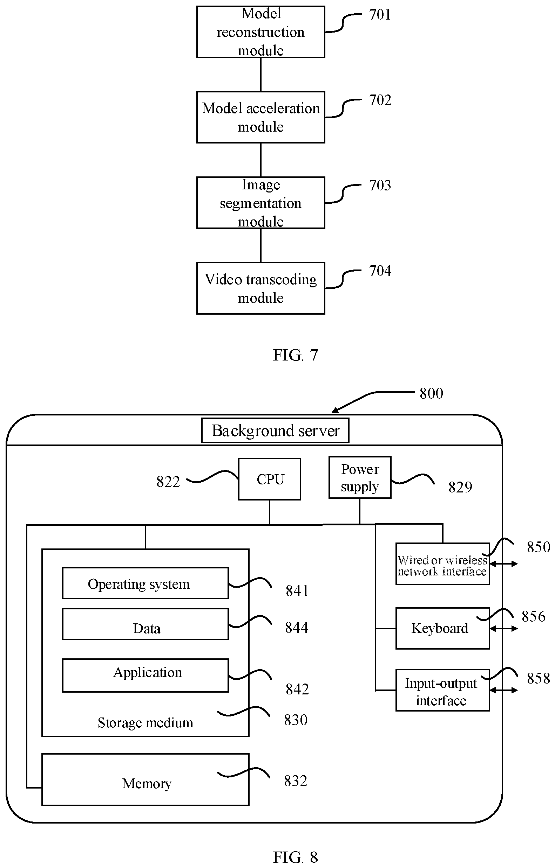

Based on the same technical concept, an embodiment of the present disclosure further provides a device for transcoding a video. As shown in FIG. 7, the device includes:
a model reconstruction module 701, configured to reconstruct an existing semantic segmentation model based on a processing layer supported by a TensorRT engine;
a model acceleration module 702, configured to load a reconstructed semantic segmentation model into the TensorRT engine to generate a TensorRT acceleration model;
an image segmentation module 703, configured to perform semantic segmentation on a video frame image through the TensorRT acceleration model to generate a multi-level ROI of the video frame image; and
a video transcoding module 704, configured to use different transcoding rates to transcode the multi-level ROI and other regions of the video frame image.

In one embodiment, the semantic segmentation model is a PSPNet model; the model reconstruction module 701 is specifically configured to:
replace a self-adaptive pooling layer in an existing PSPNet model with a multi-scale mean pooling layer; and
replace a bilinear upsampling layer in the existing PSPNet model with a transpose convolution layer.

In one embodiment, the model reconstruction module 701 is specifically configured to:
replace a multi-scale bilinear upsampling layer in the existing PSPNet model with a nearest neighbor pool upsampling layer and a shared transpose convolution layer.

In the embodiments of the present disclosure, the existing semantic segmentation model is reconstructed based on the processing layer supported by the TensorRT engine; the reconstructed semantic segmentation model is loaded into the TensorRT engine to generate the TensorRT acceleration model; the TensorRT acceleration model is performed on the video frame image through the TensorRT acceleration model to generate the multi-level ROI of the video frame image; and the different transcoding rates are used to transcode the multi-level ROI and other regions of the video frame image respectively. In this way, through the reconstruction of the existing semantic segmentation model, the semantic segmentation model may be accelerated by using the TensorRT engine, so that both the image segmentation effect and real-time performance can be ensured. Furthermore, the accelerated model is used to perform quick semantic segmentation on the video frame image to obtain the multi-level ROI of the video frame image, the range of the ROI may be flexibly and accurately determined according to different scenes, and then the different transcoding rates are used to transcode each ROI, so that contents of all levels in the video frame image may occupy the code rate share reasonably, which can not only ensure picture quality of the video, but also reduce consumption of bandwidth resource during video transmission.

FIG. 8 is a structural schematic diagram of a background server provided in an embodiment of the present disclosure. The background server 800 may vary considerably due to different configurations or performance, and may include one or more central processing units 822 (such as one or more processors), a memory 832, and one or more the storage mediums 830 (for example, one or more mass storage devices) storing a storage application 842 or data 844. Herein, the memory 832 and the storage medium 830 may be capable of temporary storage or persistent storage. The program stored in the storage medium 830 may include one or more modules (not shown in the figure), and each module may include a series of instruction operations for the background server 800. In this embodiment, the central processing unit 822 may be configured to communicate with the storage medium 830 and execute a series of instruction operations in the storage medium 830 on the background server 800.

The background server 800 may also include one or more power supplies 829, one or more wired or wireless network interfaces 850, one or more input-output interfaces 858, one or more keyboards 856, and/or, one or more operating systems 841, such as Windows Server, Mac OS X, Unix, Linux, FreeBSD, etc.

The background server 800 may include a memory, and one or more programs stored in the memory and configured to be executed by one or more processors, and the one or more programs may include instructions for transcoding the video.

Those skilled in the art may understand that all or some steps of the embodiments described above may be completed by hardware or by a program instructing related hardware, and the program may be stored in a computer readable storage medium. The storage medium described above may be a read-only memory, a magnetic disk, an optical disk or the like.

The above are only part of the embodiments of the present disclosure, which are not intended to limit the present disclosure. Any modification, equivalent replacement, improvement, or the like made within the spirit and principle of the present disclosure shall be included in the protection scope of the present disclosure.

## Claims

1. A method for transcoding a video, comprising:
reconstructing an existing semantic segmentation model based on a processing layer supported by a TensorRT engine;
loading a reconstructed semantic segmentation model into the TensorRT engine to generate a TensorRT acceleration model;
performing semantic segmentation on a video frame image through the TensorRT acceleration model to generate a multi-level ROI of the video frame image; and
using different transcoding rates to transcode the multi-level ROI and other regions of the video frame image respectively.

2. The method according to claim 1, wherein the semantic segmentation model is a PSPNet model; and reconstructing the existing semantic segmentation model based on the processing layer supported by the TensorRT engine comprises:
respectively replacing a self-adaptive pooling layer and a bilinear upsampling layer in the existing PSPNet model with processing layers having similar effects and supported by the TensorRT engine.

3. The method according to claim 2, wherein respectively replacing the adaptive pooling layer and bilinear upsampling layer in the existing PSPNet model with processing layers having similar effects and supported by the TensorRT engine comprises:
replacing the self-adaptive pooling layer in the existing PSPNet model with a multi-scale mean pooling layer; and
replacing the bilinear upsampling layer in the existing PSPNet model with a transpose convolution layer.

4. The method according to claim 3, wherein replacing the bilinear upsampling layer in the existing PSPNet model with the transpose convolution layer comprises:
replacing a multi-scale bilinear upsampling layer in the existing PSPNet model with a nearest neighbor pool upsampling layer and a shared transpose convolution layer.

5. The method according to claim 1, wherein loading the reconstructed semantic segmentation model into the TensorRT engine to generate the TensorRT acceleration model comprises:
training the reconstructed semantic segmentation model periodically based on image materials in a preset training material set to generate a weight file, wherein the image materials are marked with contour lines of various components of different objects; and
loading a model file of the reconstructed semantic segmentation model and the weight file into the TensorRT engine to generate the TensorRT acceleration model.

6. The method according to claim 1, wherein performing the semantic segmentation on the video frame image through the TensorRT acceleration model to generate the multi-level ROI of the video frame image comprises:
acquiring a target frame image of a video to be transcoded, and generating a global feature map of the target frame image based on a feature extraction module of the TensorRT acceleration model;
performing feature segmentation on the global feature map through a feature segmentation module of the TensorRT acceleration model to determine multiple components of at least one target object in the target frame image; and
determining the multi-level ROI of the target frame image based on a transcoding priority corresponding to each of the components.

7. The method according to claim 6, wherein using different transcoding rates to transcode the multi-level ROI and other regions of the target frame image respectively comprises:
selecting a target-level transcoding rate sequentially in a descending order of the transcoding rate; and
selecting, in a descending order of the transcoding priority, a transcoding region corresponding to the target-level transcoding rate from unselected ROIs according to a transcoding area corresponding to the target-level transcoding rate.

8. The method according to claim 7, further comprising:
adjusting the transcoding area corresponding to the transcoding rate of each level periodically according to current device performance load and line bandwidth load, and attribute information of the video to be transcoded.

9. The method according to claim 6, wherein after determining multiple components of at least one target object in the target frame image, the method further comprises:
adjusting the transcoding priority corresponding to the components of each target object according to a video type of the video to be transcoded and an object type of each of the target object.

10. The method according to claim 1, wherein using different transcoding rates to transcode the multi-level ROI and other regions of the target frame image respectively comprises:
receiving information of feature clarity or fuzz of the video to be transcoded, and determining a target feature region in the target frame image according to the information of feature clarity or fuzz; and
using the different transcoding rates to transcode the multi-level ROI, the target feature region and other regions of the target frame image respectively.

11. A device for transcoding a video, comprising:
a model reconstruction module, configured to reconstruct an existing semantic segmentation model based on a processing layer supported by a TensorRT engine;
a model acceleration module, configured to load a reconstructed semantic segmentation model into the TensorRT engine to generate a TensorRT acceleration model;
an image segmentation module, configured to perform semantic segmentation on a video frame image through the TensorRT acceleration model to generate a multi-level ROI of the video frame image; and
a video transcoding module, configured to use different transcoding rates to transcode the multi-level ROI and other regions of the video frame image.

12. The device according to claim 11, wherein the semantic segmentation model is a PSPNet model; and the model reconstruction module is specifically configured to:
replace a self-adaptive pooling layer in an existing PSPNet model with a multi-scale mean pooling layer; and
replace a bilinear upsampling layer in the existing PSPNet model with a transpose convolution layer.

13. The method according to claim 12, wherein the model reconstruction module is specifically configured to:
replace a multi-scale bilinear upsampling layer in the existing PSPNet model with a nearest neighbor pool upsampling layer and a shared transpose convolution layer.

14. A background server, comprising a processor and a memory, wherein the memory stores at least one instruction, at least one program, a code set or an instruction set which, when loaded and executed by the processor, causes the processor to perform the method for transcoding the video according to any one of claims 1 to 10.

15. A computer readable storage medium storing at least one instruction, at least one program, a code set or an instruction set, when loaded and executed by a processor, causes the processor to perform the method for transcoding the video according to any one of claims 1 to 10.
